# EUROPEAN PATENT APPLICATION

(11) **EP 4 202 270 A1**
(43) Date of publication of application: **28.06.2023**
(21) Application number: 21217067.4
(22) Date of filing: 22.12.2021
(51) Int. Cl.: F16K 11/07

(54) **MULTI-PORT VALVE ASSEMBLY**

(71) Applicant: ESBE AB, 333 75 Reftele (SE)
(72) Inventor: GRUBER, Mattias, 331 35 Värnamo (SE); ELEBO, Joi, 333 75 Reftele (SE)
(74) Representative: AWA Sweden AB

(57) **Abstract**

A valve assembly (1000) is disclosed. The valve assembly (1000) comprises a valve housing (100). The valve housing further comprises a first fluid opening (20), a second fluid opening (40), a third fluid opening (60), a valve bore (80) having an axial extension (A1), and a flow limiting valve housing portion (110). The valve assembly further comprises a plunger (200) disposed within the valve bore (80), the plunger (200) being arranged to move along the axial extension (A1) of the valve bore (80) between a first plunger position and a second plunger position. The plunger (200), while being axially situated in a fluid flow preventing position being a position between the first and the second plunger position, prevents a fluid to flow in a first flow path (FP1) and in a second flow path (FP2), wherein the first flow path (FP1) is a flow path between the first fluid opening (20) and the second fluid opening (40), and wherein the second flow path (FP2) is a flow path between the first fluid opening (20) and the third fluid opening (60). A method (500) for controlling a fluid flowing through a valve assembly (1000) is also provided.

## Description

### TECHNICAL FIELD

The present disclosure relates to multi-port valve assemblies.

### BACKGROUND

Systems providing a heated or cooled fluid from a source being distributed to the user side via two partial circuits, e.g., heat exchangers, are common in the art. To control supply to the user side in such systems, two control valves are typically used, where respective partial circuit is associated with a single such control valve. These control valves may be of two-way type for controlling the flow through one partial circuit and thereby control the heating or cooling supply to the user side. Should one of the valves be closed in systems with two sources, heating or cooling is prevented to be delivered from one of the sources. Should one of the valves be closed in systems with two user circuits, heat or cooling may be prevented to be delivered to one of the two user circuits. In systems with two user circuits where the available heat from the source is often scarce, and the supply to a respective user side is limited, a so-called priority function may be exploited, thereby allowing a single valve to be open at a time. In systems with two sources, one source may be dedicated for cooling and the other for heating meaning that only one of these is active at a time. Based on at least the above, there is a need for a valve assembly that simplifies heat priority or switch between heating or cooling in terms of number of components, installation, and maintenance, both in systems as exemplified above, and other systems.

### SUMMARY

It is an object to mitigate, alleviate or eliminate one or more of the above-identified deficiencies in the art and disadvantages singly or in any combination and at least partly solve the above-mentioned problem.

According to a first aspect, there is provided a valve assembly comprising a valve housing comprising a first fluid opening, a second fluid opening, a third fluid opening, a valve bore having an axial extension, a flow limiting valve housing portion, and a plunger disposed within the valve bore, the plunger being arranged to move along the axial extension of the valve bore between a first plunger position and a second plunger position, wherein the plunger, while being axially situated in a fluid flow preventing position being a position between the first and the second plunger position, prevents a fluid to flow in a first flow path and in a second flow path, wherein the first flow path is a flow path between the first fluid opening and the second fluid opening, and wherein the second flow path is a flow path between the first fluid opening and the third fluid opening.

Thereby a valve assembly that may function as a diverting valve is provided, allowing a fluid to flow between two fluid openings at a time, while the remaining fluid opening is closed and thereby prevents any fluid flow. This is in contrast to commonly occurring diverting valves (capable of diverting an incoming fluid to flow out through different valve openings) in which opening of a specific flow path affects a flow path in the remaining flow path. That is, if a first flow path of such a commonly occurring diverting valve is open to, e.g., a 70% extent, the second flow path is open to a 30% extent. Closing the first flow path in the same commonly occurring diverting valve to be open to a 60% extent thereby opens up the second flow path to a 40% extent, etc. Now returning to the present disclosure. Respective flow path may be controlled separately, allowing control of a fluid flow in one of the flow paths while the remaining fluid opening is closed. Hence, a single such a valve assembly may function as two conventional two-way valves for, e.g., modulating water flow in systems having alternative flow paths. This may facilitate maintenance and installation. Further, installation costs may be reduced. Hence, the valve assembly facilitates a simplified approach in terms of heat priority in, e.g., a heating or cooling system having two heat exchangers, since the number of components may be reduced by one or two valve assemblies (depending on whether heat priority is done electronically or with a diverting valve). Other systems in which the valve assembly may be installed is a heating system, a cooling system, a potable water system, a combined heating or cooling system, in systems for heating, cooling and/or potable water, etc. The present valve assembly may be a three-way valve being connected in a piping system accordingly. The valve assembly may combine the functionality of two control valves and one diverting valve, which thereby may reduce the number of components in a heating or cooling system, thereby reducing costs, simplifying maintenance, etc. Although the present disclosure provides examples of the valve assembly being a three-way valve, the skilled person appreciates that the valve assembly may have more than three fluid openings. By way of example, should the valve assembly have precisely four fluid openings, an incoming fluid flow may flow from the first fluid opening to one or more of the second, third, and a fourth fluid opening. In such a four-way valve, there may be a plurality of flow path options. Control of a specific flow path in connection thereto may be as set out above and below. Further, reference to a specific flow path being open for a fluid flow may thereby imply that one or more of the remaining flow paths are blocked.

The plunger may, on axially opposing sides, have open ends.

Hence, a fluid may flow between the exterior and the interior of the plunger via at least one of the open ends, facilitating an enhanced fluid control. Further, this may provide a more compact valve assembly with remained function. In connection to at least one of the ends of the plunger, the plunger may comprise spokes or an end plate having holes attachable to a translator for translating the plunger along the axial extension of the valve bore. Hence, the word "open end" is to be interpreted widely. For instance, "open end" is to be understood as being capable of allowing a fluid flow flowing through the open end.

The plunger may comprise a sleeve being unobstructed.

The word "sleeve" as used herein, is typically to be interpreted as a mantle of a cylindrical geometry. Hence, the sleeve extends in the axial extension. The sleeve may have a wall thickness being significantly smaller than a radial extension of the plunger, e.g. the diameter of the plunger. The sleeve being "unobstructed" is herein understood being a sleeve that "lacks through-going holes". Hence, a fluid may not leave or enter between an interior and an exterior of the sleeve through the sleeve. Rather, fluid may leave or enter between the interior and an exterior of the sleeve through the axially opposing open ends of the sleeve. Put in mathematical terms, the "unobstructed sleeve" is similar to a "simply connected sleeve", thereby referring to a sleeve that "lacks through-going holes". This option is referred to in connection to a second embodiment of the valve assembly, further described below.

A first merge between the second fluid opening and the valve bore and a second merge between the third fluid opening and the valve bore may be axially displaced along the axial extension of the valve bore such that the first merge and the second merge are located on axially opposing sides of the flow limiting valve housing portion.

This may facilitate diverting a fluid flow between the first flow path and the second flow path. Further, this may provide a relatively compact and simple valve assembly.

The sleeve of the plunger has a first and a second end being separated along the axial extension. The sleeve may comprise a sleeve opening that may, at least partially, be constituted by a circumferential through-going opening being circumferentially oriented in a geometrical plane perpendicular to the axial extension of the plunger and being located between the first and the second end of the sleeve.

The location of the circumferential through-going opening may be approximately axially centered on the sleeve. By way of example, the location may, analogously, refer to a point P along a straight line of length L may within this context be located on coordinates in the range 0.25L<P<0.75L. Hence, fluid may flow between an exterior to an interior of the sleeve in a transverse direction being transverse to the axial extension of the valve bore. This may facilitate diverting and controlling a fluid to flow along the first or the second flow path. This option is referred to in connection with a first embodiment of the valve assembly, further described below.

An outer circumferential edge portion of the circumferential through-going opening may be chamfered, thereby facilitating controlling a volumetric fluid flow exclusively in the first flow path or exclusively in the second flow path.

This may facilitate a flow control associated with a certain fluid flow profile. Such a certain fluid flow profile may be further tuned by a specific type of chamfering of the circumferential through-going opening, further described below.

The first fluid opening may be a fluid inlet, the second fluid opening may be a first fluid outlet, and the third fluid opening may be a second fluid outlet.

This may serve as a typical use case in that the valve assembly functions as a diverting valve according to the above. However, an opposite situation may be possible without modifying any of the structural features of the valve assembly. That is, the first fluid opening may be a fluid outlet, the second fluid opening may be a first fluid inlet, and the third fluid opening may be a second fluid inlet. Thereby, the valve assembly may be installed like a mixing valve, thus enhancing flexibility of the valve assembly. It is to be understood, however, that the valve assembly allows a single flow path at a time, regardless of how the valve assembly is installed in a circuit.

The valve assembly may further comprise an electronically controlled linear actuator, and a translator being aligned along the axial extension of the valve bore, the translator being operably connected to the electronically controlled linear actuator and the plunger, wherein a movement of the translator along the axial extension thereby generates a movement of the plunger along the axial extension.

The valve bore may have a circularly cylindrical geometry.

Hence, the plunger may have a complementary surface geometry to be radially securely situated in the valve bore while still being movable along the axial extension. A circularly cylindrical geometry may facilitate manufacturing of the valve assembly and parts therein.

The valve housing may be manufactured by a durable material, the durable material being any one of steel, brass, composite, iron, or any compound thereof.

Preferably, the valve housing may be manufactured by brass, facilitating durability and thereby the lifetime of the valve assembly. Other components, such as the plunger, may further be manufactured by a durable material such as brass, steel, or the like.

According to a second aspect, there is provided a method for controlling a fluid flowing through a valve assembly in a heating or cooling system, the method comprising diverting a fluid flow to flow in a first flow path being a flow path between a first fluid opening of the valve assembly and a second fluid opening of the valve assembly, or in a second flow path being a flow path between the first fluid opening and a third fluid opening of the valve assembly, and, provided a specific flow path of the first and the second flow path is open to allow a volumetric flow, exclusively controlling the volumetric flow of the fluid flowing in the specific flow path, thereby allowing to separately control a volumetric flow of the fluid flowing in the specific flow path while the remaining flow path is closed.

The above-mentioned features in connection with the first aspect, when applicable, apply to this second aspect as well. In order to avoid undue repetition, reference is therefore made to the above.

The method thereby allows a fluid to flow between two fluid opening at a time, while the remaining port is closed and thereby prevents any fluid flow. Further, respective flow path may be controlled separately, allowing control of a fluid flow of one of the flow paths while the remaining fluid opening is closed. Hence, a single such a valve assembly may function as two conventional two-way valves for, e.g., modulating hot water flow in systems having two heat exchangers. This may facilitate maintenance and installation. Further, installation costs may be reduced.

The control of the volumetric flow may be performed by an electronically controlled linear actuator having a translator operably connected thereto, wherein the translator is further operably connected to a plunger situated in a valve bore of the valve assembly.

According to a third aspect, the invention refers to the use of the valve assembly according to the features in connection with the first aspect for diverting and/or controlling a fluid flowing in a heating or cooling system.

The above-mentioned features in connection with the first aspect, when applicable, apply to this third aspect as well. In order to avoid undue repetition, reference is therefore made to the above.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or acts of the methods described as such device and method may vary. It is also to be understood that the terminology used herein is for purpose of describing particular embodiments only and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### BRIEF DESCRIPTION OF THE DRAWINGS

The above and other aspects of the present invention will now be described in more detail, with reference to appended figures. The figures should not be considered limiting; instead, they are used for explaining and understanding. Like reference numerals refer to like elements throughout.
Fig. 1 shows a side view of a cross-section of a valve assembly.
Fig. 2 shows a perspective view of a cross-section of the valve assembly.
Figs 3A-3C show different view angles of a plunger of the valve assembly.
Figs 4A-4C show a plurality of plunger positions within a valve bore of the valve assembly and flow paths resulting thereof.
Fig. 5 shows the valve assembly including an electronically controlled linear actuator mounted thereon.
Figs 6A-C show a second embodiment of the valve assembly.
Fig. 7 shows a flowchart of a method for diverting and controlling a fluid in a valve assembly.
Figs 8A-B show a first example use case of the valve assembly.
Figs 9A-B show a second example use case of the valve assembly.

### DETAILED DESCRIPTION

The present inventive concept will now be described more fully hereinafter with reference to the accompanying drawings, in which currently preferred embodiments of the inventive concept are shown. This inventive concept may, however, be embodied in many different forms and should not be construed as limited to the embodiments set forth herein; rather, these embodiments are provided for thoroughness and completeness, and to fully convey the scope of the inventive concept to the skilled person.

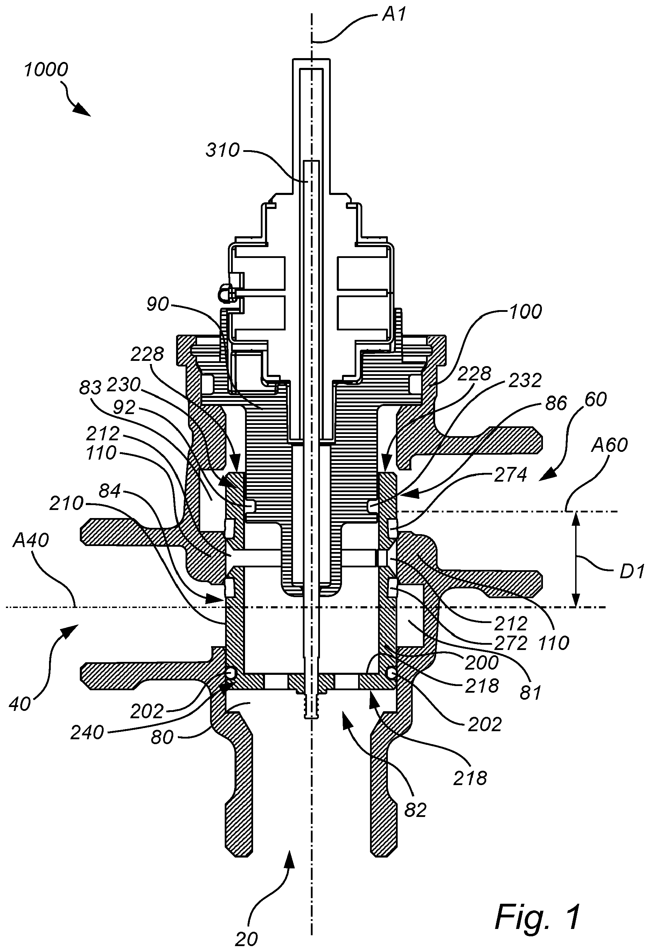

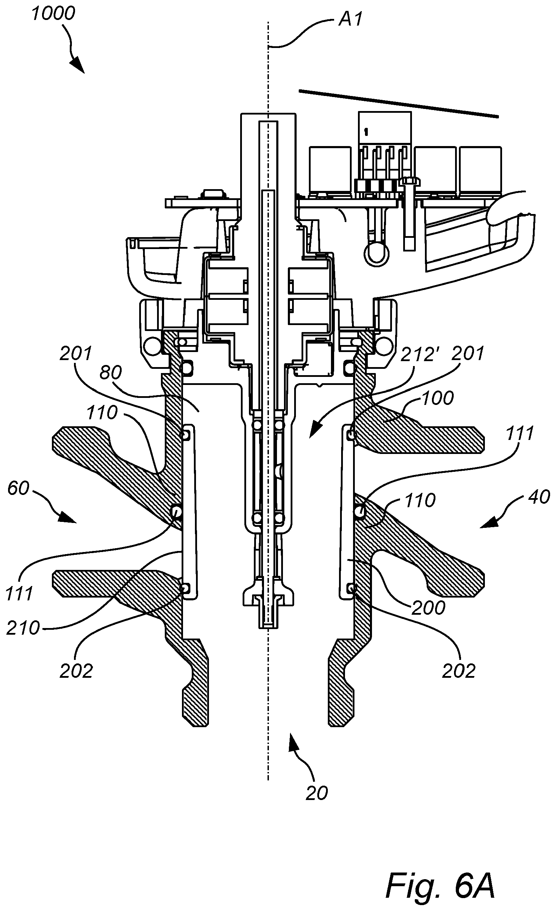

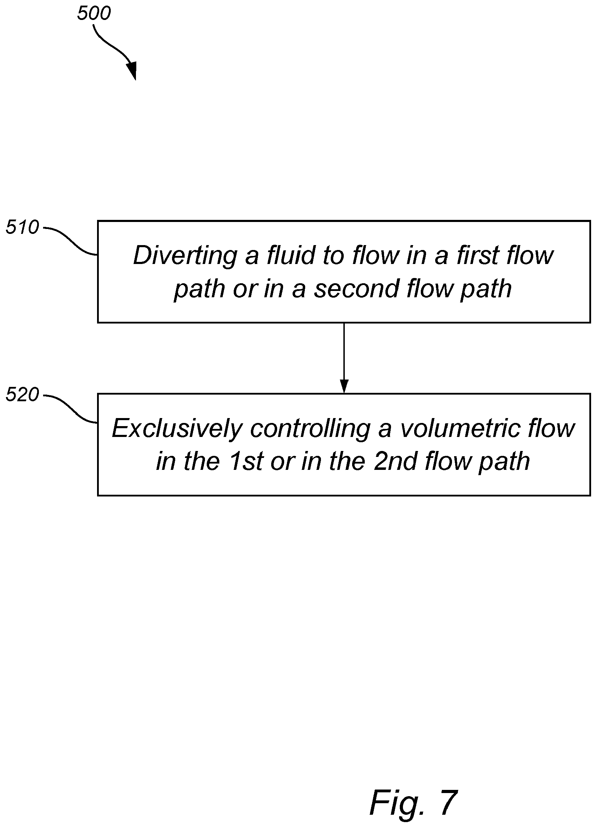

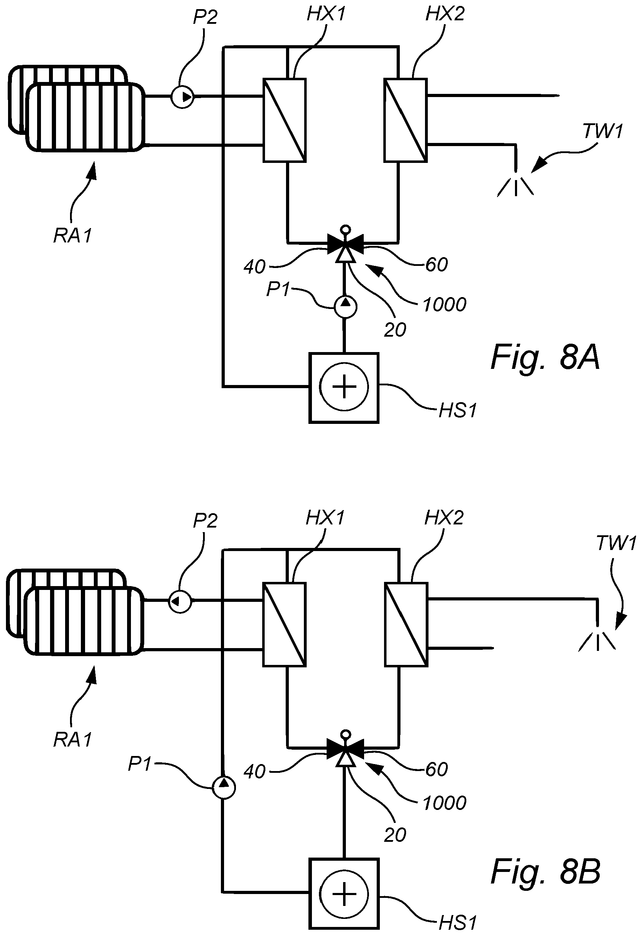

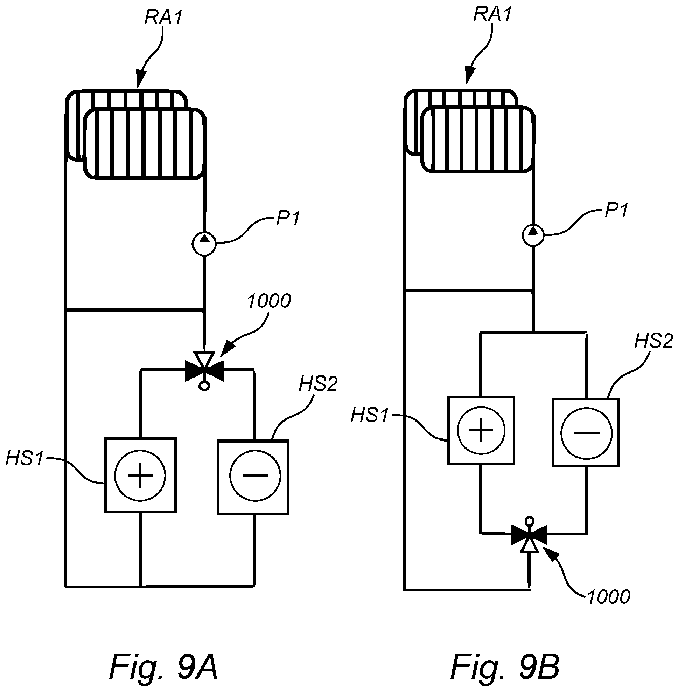

Below, a first and a second embodiment of a valve assembly 1000 will be described. The first embodiment will be described in connection with Figs 1-5, and the second embodiment will be described in connection with Figs 6A-C. Both the first and the second embodiment apply to a method 100 described in connection with Fig. 7, and example use cases described in connection with Figs 8 and 9.

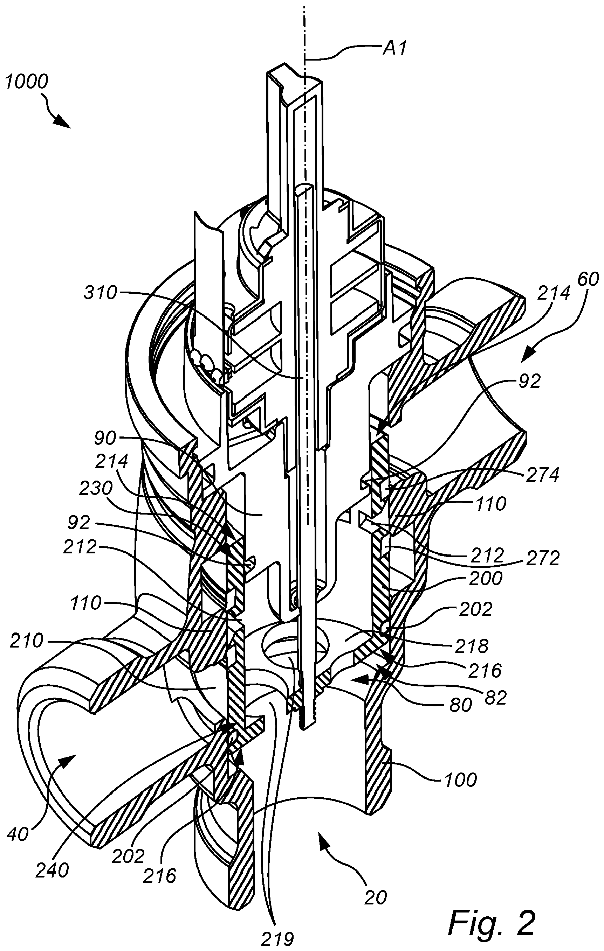

In connection with Fig. 1, there is shown a cross-sectional view of a valve assembly 1000. Similar features of the valve assembly 1000 are shown in Fig. 2, where a perspective view of the same cross section facilitates understanding of the three-dimensional characteristics of the structure of the valve assembly 1000. The valve assembly 1000 comprises a valve housing 100. The valve housing 100 comprises a first fluid opening 20, a second fluid opening 40, and a third fluid opening 60. Hence, the valve assembly 1000 shown throughout the following example(s) is a so-called three-way valve. The first fluid opening 20 may be viewed as a fluid inlet 20. Such a fluid inlet 20 is configured to allow a fluid to flow from an exterior of the valve housing 100 to an interior of the valve housing 100, via, e.g., a connected fluid pipe (not shown). The remaining fluid openings 40,60, i.e., the second 40 and the third 60 fluid opening, may be viewed as fluid outlets 40,60. Hence, a fluid may flow out from the interior of the valve housing 100 through either of the second 40 and the third 60 fluid openings. It should be appreciated, however, that either or both of the second 40 and third 60 fluid openings may act as a fluid inlet, depending on a present use case. As set out above, it is appreciated that the valve assembly may, in an alternative embodiment (not shown), comprise more than three fluid openings within the scope of the claims. The valve housing 100 further comprises a valve bore 80 having an axial extension A1. Reference to an axial movement implies a movement being substantially parallel to the axial extension A1 of the valve bore 80 if not explicitly stated otherwise. The valve bore 80 may have a cylindrical geometry. Preferably, the valve bore 80 has a circularly cylindrical geometry. A circularly cylindrical geometry may facilitate manufacturing of the valve assembly 1000. The fluid discussed throughout this text may be a liquid suitable for use in a piping of a heating or cooling system. Such a liquid may be water, or any adequate equivalent.

The valve housing 100 further comprises a flow limiting valve housing portion 110. The flow limiting valve housing portion 110 will be further described below.

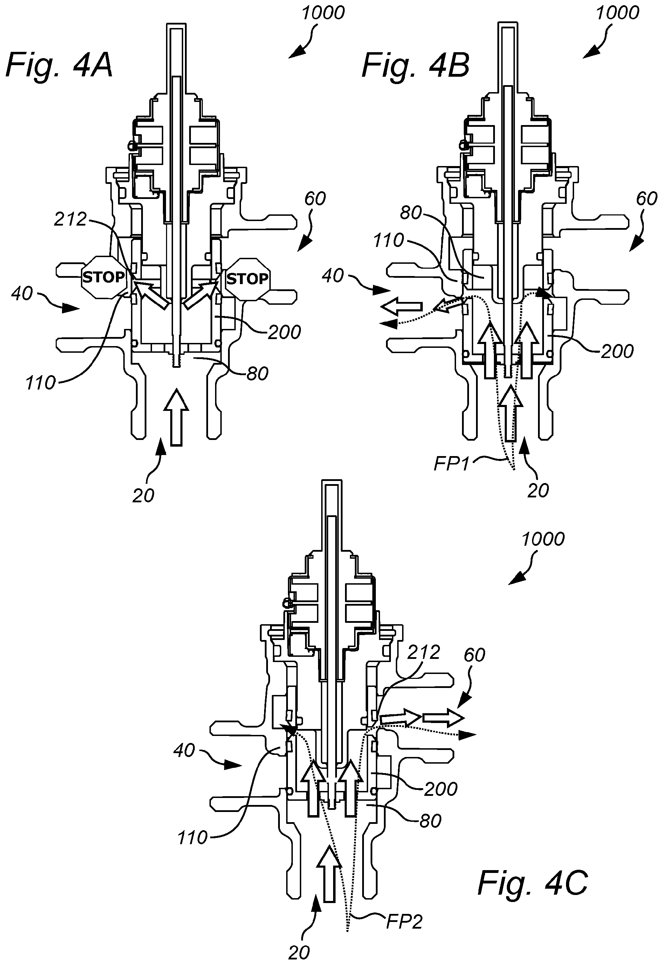

The valve housing 100 further comprises a plunger 200. The plunger 200 is disposed within the valve bore 80. If not explicitly stated otherwise, the valve assembly is assumed to be in an assembled state throughout, such that, e.g., the plunger 200 is situated in the valve bore 80. The plunger 200 is arranged to move along the axial extension A1 of the valve bore 80 between a first plunger position and a second plunger position. The first plunger position refers to, according to the orientations shown in Fig. 1 and Fig. 2, when a bottom end 218 of the plunger 200 is in contact, or relatively close to be in contact, with at a bottom edge 82 of the valve bore 80. References to orientations such as bottom, top, etc., hence regard the orientations shown in Figs 1-2, and should not be construed as limiting, as appreciated by the skilled person. A similar reasoning applies for the second plunger position, thereby referring to the plunger 200 being situated in an axially opposing end side of the valve bore 80. Depending on an axially extending length of the plunger 200 (and/or an axially extending length of the valve bore 80), the second plunger position may, however, refer to a plunger position being such that a bottom end of the plunger 200 is relatively far away from a top end of the valve bore 80. A top end position of the plunger in this case may depend on the axial extent of the plunger 200. This scenario is best understood by Fig. 4C where the plunger 200 is axially located to allow a second flow path FP2 through the valve assembly. Hence, a first plunger position may be viewed as a plunger position providing a fully open first flow path FP1. A similar reasoning applies to the second plunger position and the second flow path FP2; see Fig. 4C. Different types of plunger positions are shown in Figs 4A-C and will be further described below. The plunger 200 may be exclusively movable along the axial extension A1 of the valve bore. Hence, the plunger 200 may be arranged to be prevented to rotate about the axial extension A1 when disposed within the valve bore 80.

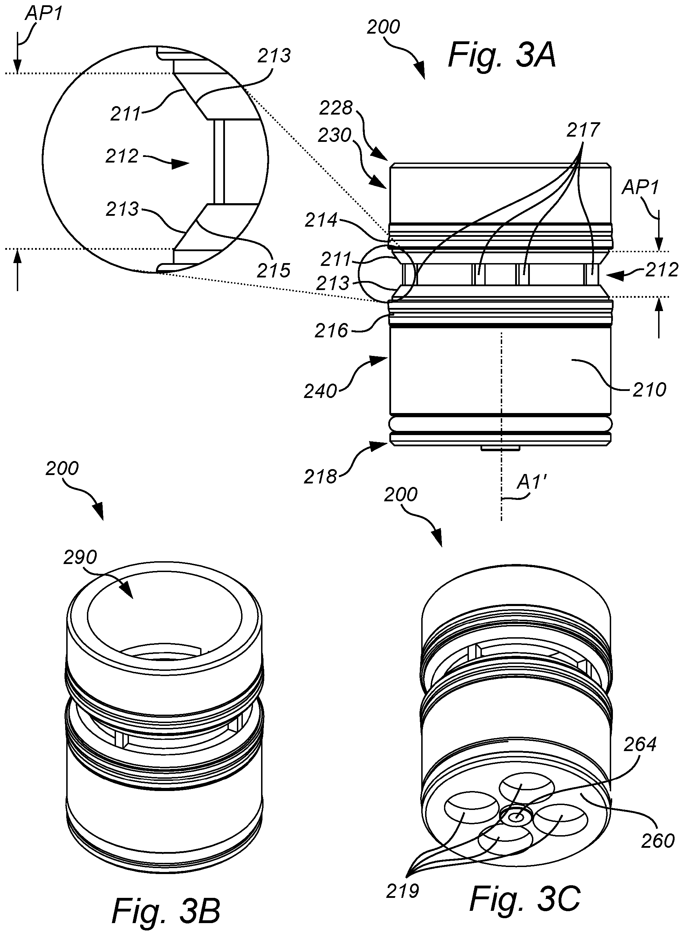

A sleeve 210 of the plunger 200 comprises a sleeve opening 212. The sleeve opening 212 is arranged to allow, while the plunger 200 is situated in the first plunger position, a fluid to flow in a first flow path FP1 being a flow path between the first fluid opening 20 and the second fluid opening 40, or, while the plunger 200 is situated in the second plunger position, in a second flow path FP2 being a flow path between the first fluid opening 20 and the second fluid opening 40. The sleeve opening 212 may be any adequate through-going opening such that a fluid may flow from the exterior of the plunger 200 to the interior of the plunger 200. Further details of the sleeve 210 of the plunger 200 is best seen in Figs 3A-3C and will described in connection thereto.

The plunger 200, while being axially situated in a fluid flow preventing position such that the sleeve opening 212 is axially aligned with the flow limiting valve housing portion 110, prevents a fluid to flow in the first flow path FP1 and in the second flow path FP2. Hence, both the second 40 and the third 60 fluid openings are closed while the plunger 200 is situated in the fluid flow preventing position. This plunger position is shown in Figs 1, 2 and 4A. As set out above, the valve assembly 1000 may function as a diverting valve. The valve assembly 1000 may thereby allow a fluid to flow between two fluid openings at a time, while the remaining fluid opening is closed and thereby prevents any fluid flow. A fluid flow is exclusively allowed in the first flow path FP1 or in the second flow path FP2, and not both simultaneously. Further, respective flow path FP1, FP2 may be controlled separately, allowing a volumetric fluid flow control in a specific flow path FP1(FP2) while the remaining flow path FP2(FP1) is blocked/closed. The degree of opening of a specific flow path depends on the axial position of the plunger 200, given a specific set of system conditions such as fluid flow, temperature, etc. The plunger 200 may assume any axial position in the valve bore 80. A fluid flow in a specific flow path FP1(FP2) may thereby be substantially continuously controlled while the remaining flow path FP2(FP1) is essentially closed. A certain discreteness in the control of the fluid may however be present, as appreciated by the skilled person. In a practical application, the plunger 200 may, e.g., assume 100-1000 different axial positions within the valve bore 80.

The sleeve opening 212 may be sealed against the flow limiting valve housing portion 110 while the plunger 200 is situated in the fluid flow preventing position. The sealing may be facilitated by a first 272 and a second 274 sealing flat ring being circumferentially oriented axially below and above the sleeve opening 212 of the plunger 200 to prevent a fluid leakage. The flat rings 272,274 may equally well be O rings, or any other soft sealing element. The flat rings 272,274 may be manufactured by any adequate elastic material, such as rubber. Preferably, the rubber may be nitrile rubber, also known as nitrile butadiene rubber (NBR). Alternatively, the rubber may be ethylene propylene diene monomer rubber (EPDM), but other natural or synthetic rubbers such as natural rubber (NR), styrene rubber (SBR), chloroprene rubber (CR), butyl rubber (IIR), silicone rubber (Q) or a mixture thereof, such as a mixture of natural rubber and styrene rubber (NR/SBR) are also possible. This may further apply for other disclosed O rings, flat rings, etc., in this text. It should be appreciated that any disclosed O ring, flat ring, etc., herein may be replaced by any soft sealing element without departing from the scope of the claims.

The valve assembly 1000 may further comprise a first valve bore chamber 81. The first valve bore chamber 81 merges with the valve bore 80. The first valve bore chamber 81 may have a cylindrical geometry. The cylindrical geometry of the first valve bore chamber 81 may be a concentrical extension of the cylindrical geometry of the valve bore 80. Hence, the first valve bore chamber 81 may have a similar centre point as the valve bore in a geometrical plane transverse to the axial extension A1 of the valve bore 80. The first valve bore chamber 81 may be located on a similar axial position as the second fluid opening 40. Hence, a fluid that has flowed into the plunger 200 may flow out from the plunger 200 through a direction being any angular (azimuthal) direction into the second valve bore chamber 81 to thereafter circumvent the sleeve 210 of the plunger 200 until reaching the second fluid opening 40. Hence, a volumetric fluid flow along the first flow path FP1 may be increased by the first valve bore chamber 81.

The valve assembly 1000 may further comprise a second valve bore chamber 83. The second valve bore chamber 83 merges with the valve bore 80. The second chamber 83 may have a cylindrical geometry. The cylindrical geometry of the second valve bore chamber 83 may be a concentrical extension of the cylindrical geometry of the valve bore 80. Hence, the second valve bore chamber 83 may have a similar centre point as the valve bore 80 in a geometrical plane transverse to the axial extension A1 of the valve bore 80. The second valve bore chamber 83 may be located on a similar axial position as the third fluid opening 60. Hence, a fluid that has flowed into the plunger 200 may flow out from the plunger 200 through a direction being any angular (azimuthal) direction into the second valve bore chamber 83 to thereafter circumvent the sleeve 210 of the plunger 200 until reaching the third fluid opening. Hence, a volumetric fluid flow along the second flow path FP2 may be increased by the second valve bore chamber 83. The valve chambers 81,83 may be absent in the second embodiment, described below.

A first merge 84 between the second fluid opening 40 and the valve bore 80 and a second merge 86 between the third fluid opening 60 and the valve bore 80 may be axially displaced by a distance D1 along the axial extension A1 of the valve bore 80 such that the first merge 84 and the second merge 86 are located on axially opposing sides of the flow limiting valve housing portion 110. Hence, an axial extension A40 of the second fluid opening 40 and an axial extension A60 of the third fluid opening 60 may be substantially parallel. However, it should be appreciated that the axial extensions A40, A60 may, alternatively, have any adequate angle between each other with a substantially remained function. Such an angle may be in the range 30-330 degrees, more preferably in the range 90-270 degrees, and even more preferably in the range 170-190 degrees (as depicted in the appended drawings). A merge as discussed herein refers to an intersecting region between two spaces through which a fluid may flow. A cross section of a merge hence may set a constraint on a volumetric flow of a specific fluid flowing between the two spaces, given a specific set of system conditions such as fluid flow, temperature, etc. Hence, a top end, with respect to the axial extension A1 of the valve bore, of the first merge 84 and a bottom end of the second merge 86 may be separated by an axially extending height of the flow limiting valve housing portion 110.

The valve assembly 1000 may further comprise a valve bore insert 90. The valve bore insert 90 may be omitted in connection with the second embodiment. The valve bore insert 90 is attached to the valve housing 100 and substantially non-movable relative to the valve housing 100. A valve bore portion of the valve bore insert 90 being located in the valve bore 80 has an outer circumferential geometry complementary to an inner circumferential geometry of the plunger 200. At least a portion of the valve bore insert 90 is arranged to be enclosed by the plunger 200 when the valve assembly 1000 is assembled in a use position. Hence, the plunger 200 has a cylindrical sleeve and an open axially top end 290 (see Fig. 3B), which will be further discussed below. The valve bore insert 90 may comprise an insertion O ring 92 for sealing the interior of the plunger 200 and the valve bore insertion 90.

In connection with Figs 3A-C, the plunger 200 is shown in isolation in a plurality of view directions to emphasize its structural features of the present example embodiment(s). The sleeve 210 of the plunger 200 has a first 218 and a second 228 end being separated along an axial extension A1' of the plunger 200. The axial extension A1' of the plunger 200 coincides with the axial extension A1 of the valve bore 80 when the plunger 200 is situated in the valve bore 80, i.e., when the valve assembly 1000 is assembled in its use position. The sleeve opening 212 may, at least partially, be constituted by a circumferential through-going opening 212 being circumferentially oriented in a geometrical plane perpendicular to the axial extension A1' of the plunger 200. The circumferential through-going opening 212 may occasionally be denoted sleeve opening 212. The circumferential through-going opening 212 may be centrally located on the sleeve 210 relative to the first 218 and the second 228 end of the sleeve 210. Hence, the circumferential through-going opening 212 may be substantially axially centered on the sleeve 210. The circumferential through-going opening 212 may thereby differ from being exactly centrally located on the sleeve 210. The wording "centrally located" may in a non-limiting way refer to an axial location on the sleeve 210 being in the range of 25-75% of an axial length of the plunger 200 relative to a specific axial end of the plunger 200 with remained function. As can be seen in a plurality of the appended drawings, the circumferential through-going opening 212 is exemplified being axially located closer to the second end 228 than to the first end 218 of the plunger 200. The location of the circumferential through-going opening 212 may depend on axial positions of axially opposing sides of the valve bore 80, an axial extension of the valve bore insert 90, etc. The plunger 200 may then be viewed having an upper plunger portion 230 and a lower plunger portion 240, wherein the upper plunger portion 230 and the lower plunger portion 240 are axially separated by the sleeve opening 210. A plurality of connection elements 217 may mutually connect the upper plunger portion 230 and the lower plunger portion 240. The plurality of connection elements 217 may comprise two or more connection elements 217.

An outer circumferential edge portion 211,213 of the circumferential through-going opening 212 may be chamfered. This may facilitate controlling a volumetric fluid flow exclusively in the first flow path FP1 or exclusively in the second flow path FP2. Hence, the circumferential edge portion 211;213 may comprise a first chamfered edge 211 and/or a second chamfered edge 213. A smallest angle between the axial extension A1' of the plunger 200 and the first chamfered edge portion 211 may be less than 90 degrees. Preferably, such a smallest angle may lie in the range of 25-75 degrees, and more preferably in the range of 35-55 degrees. The same may apply for the second chamfered edge portion 213. Alternatively, the first 211 and the second 213 edge portions may differ to facilitate a specific fluid flow characteristic. Edges in connection with the chamfered edge portions 211;213 may be rounded. Other types of edge modifications of the circumferential edge portion 211,213 arranged to achieve a specific fluid flow characteristic may however be possible within the scope of the claims. By way of example, the described chamfer may be a fillet, or the like.

The plunger 200 may, in an axially bottom end 218, comprise a through-going opening 219; see Fig. 3C. Preferably, the axially bottom end 218 comprises a bottom plate 260 having a plurality of through-going openings 219, through which a fluid may flow. Herein, four through-going openings 219 are shown. However, any adequate number of through-going openings 219 may be possible. The through-going openings 219 may have an edge geometry being circular, although any suitable edge geometry is possible. Edges of the through-going opening(s) 219 may be chamfered. The bottom plate 260 may further comprise an insertion portion 264 in which a translator 310 (further discussed below) is fastened to, by movement of the translator 310, allow an axial movement of the plunger 200 along the axial extension A1 in the valve bore 80.

In Fig. 3B the open axially top end 290 is shown. As described previously, the plunger 200 may enclose at least a portion of the valve bore insert 90 upon movement of the plunger 200 upwards in the valve bore 80.

In connection with Figs 4A-C, there is shown a cross-sectional view of the valve assembly 1000, in which the plunger 200 assumed different axial positions, where a specific axial position allows a specific flow path of a fluid flowing through the valve assembly 1000. It is understood that no flow path is present in Fig. 4A; hence, fluid cannot flow out from neither the second fluid opening 40 nor the third fluid opening 60 here.

In Fig 4A the plunger 200 is situated in the valve bore 80 such that the sleeve opening 212 axially coincides with the flow limiting valve housing portion 110. Hence, fluid flowing into the valve assembly via the first fluid opening 20 is prevented to flow out from both the second fluid opening 40 and the third fluid opening 60. It is thereby understood that the valve assembly 1000 is closed whenever the plunger 200 is situated in this fluid flow preventing position being an intermediate plunger position between the first and the second end position of the plunger 200.

In Fig. 4B the plunger 200 is situated in the valve bore 80 such that the sleeve opening 212 merges with the second fluid opening 40, thereby allowing a fluid to flow from the interior of the plunger 200 to and out from the second fluid opening 40. For this plunger position, the third fluid opening is closed, meaning that fluid is prevented to flow out from the third fluid opening 60. Hence, the first flow path FP1 is open in Fig. 4B. An opposite flow direction being oppositely directed relative to the first flow path FP1 is equally possible. As should be appreciated by the skilled person, the axial extent of the plunge 200 may be different such that opening up the merge between the second fluid opening 40 and the interior of the plunge 200. Hence, relative dimensions of the valve assembly 1000 in the appended drawings may differ in view of optimal relative dimensions of the valve assembly 1000.

In Fig 4C the plunger 200 is situated in the valve bore 80 such that the sleeve opening 212 merges with the third fluid opening 60, thereby allowing fluid to flow from the interior of the plunger 200 to and out from the third fluid opening 60. For this plunger position, the second fluid opening 40 is closed, meaning that fluid is prevented to flow out from the second fluid opening 40. Hence, the second flow path FP2 is open in Fig. 4C. An opposite flow direction oppositely directed relative to the second flow path FP2 is equally possible.

The flow paths FP1, FP2 explicitly shown in Figs 4B and 4C applies to a first example use case further described in connection with Figs 7 and 8 below. Therein, the valve assembly 1000 functions as a combined control and diverting valve for controlling a fluid flow through one fluid opening while, simultaneously, blocking a fluid flow through the remaining fluid opening.

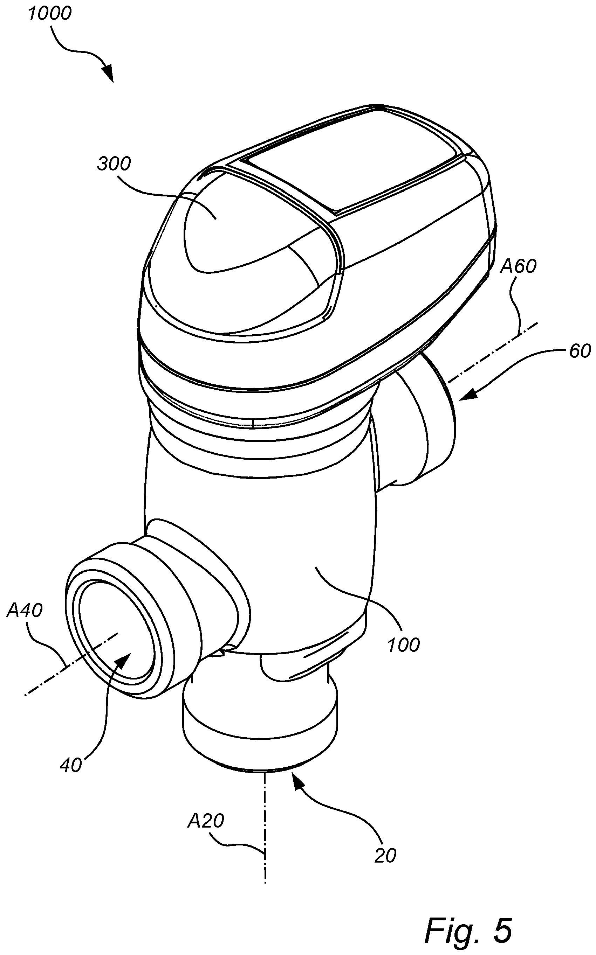

In connection with Fig. 5 an exterior of the valve assembly 1000 is shown. The valve assembly 1000 may further comprise an electronically controlled linear actuator 300, and a translator 310 being aligned along the axial extension A1 of the valve bore 80. An exterior of the valve assembly including the electronically controlled linear actuator 300 is shown in Fig. 5. The translator 310 is operably connected to the electronically controlled linear actuator 300 and the plunger 200. A bottom end portion of the translator 310 may be securely fastened in the insert portion 264 of the bottom plate 260 of the plunger 200. A movement of the translator 310 along the axial extension A1 of the valve bore 80 thereby generates a movement of the plunger 200 along the axial extension A1. The plunger 200 and the translator 310 can be mutually fastened. This may be done by riveting. Alternatively, this may be done by, e.g., screws, nuts, welding, gluing, etc. Hence, the insert portion 264 may be a threaded through-going opening, and the bottom end portion of the translator may be threaded by threads complementary to the threads of the threaded through-going opening of the insert portion 264. The plunger 200 and the translator 310 may be prevented to mutually rotate relative to each other about the axial extension A1.

The valve housing 100 may be manufactured by a durable material. The durable material may any one of steel, brass, composite, iron, or any compound thereof. In general, any durable metal, metal compound, or composite material may be possible. Preferably, the valve housing 100 is manufactured by brass. Other components, such as the plunger 200, may be manufactured by a durable material such as brass or steel.

In connection with Fig. 6A there is shown a second embodiment of the valve assembly 1000. Most of the features disclosed in the first embodiment are also present in the second embodiment with reference numerals identifying similar or same features. Some differences have already been mentioned above. The description below will thereby focus on explaining the differing features.

As described above in connection with the first embodiment, the plunger 200 has, on axially opposing sides, open ends. In contrast to the first embodiment, a valve bore insert 90 is absent in the second embodiment. This since a fluid flowing through the plunger 200 does so between the ends of the plunger 200, in contrast to from the bottom end of the plunger through the circumferentially through-going opening 212 in the first embodiment.

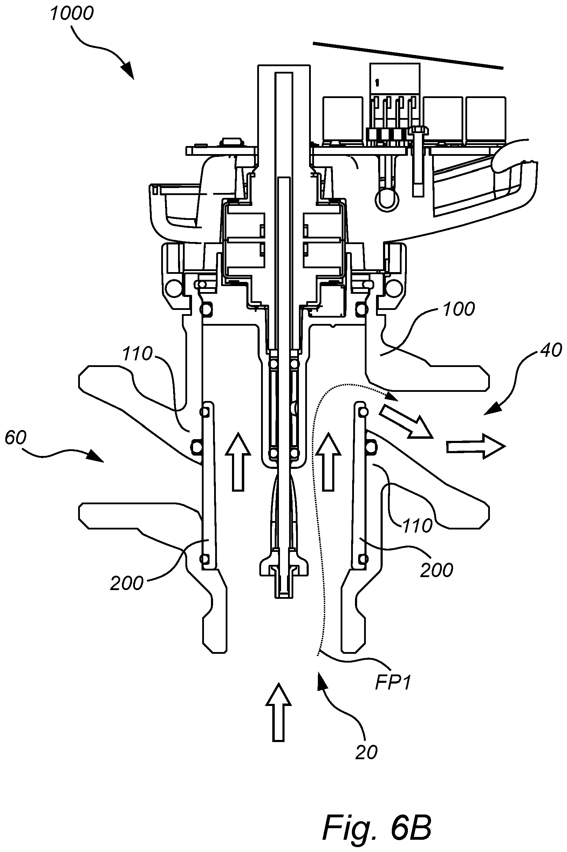

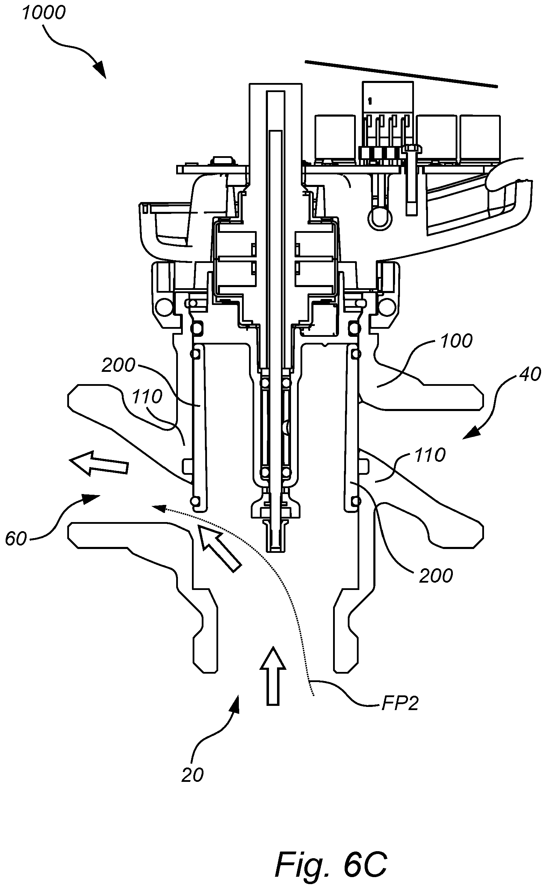

Hence, the sleeve of the plunger 200 in the second embodiment may be unobstructed. This implies that the plunger 200 lacks the previously described circumferentially through-going opening 212 of the first embodiment through which fluid may flow. Put in mathematical terms, the sleeve may thereby be "simply connected", referring to a sleeve that "lacks through-going holes". The top open end 212' of the plunger 200 has a similar function as the circumferential through-going opening 212 of the first embodiment. The wording "open end" is to be interpreted widely. For instance, an open end of the plunger 200 may comprise a plate having a through-going opening as discussed in connection with Fig. 3C above. Alternatively, an open end may comprise a plurality of spokes attached to the translator 310 for moving the plunger along the axial extension A1. The second embodiment may provide a similar technical effect in connection with the previously discussed plunger positions in that fluid cannot flow through the valve assembly 1000 while the plunger is situated between the first and the second plunger position. This fluid flow preventing position is shown in Fig. 6A. Here, fluid flowing into the first fluid opening 20 cannot flow through the valve bore 80, i.e. neither out through the second fluid opening 40 nor out through the third fluid opening 60. For instance, moving the plunger towards the first plunger position according to the previous description, enables opening of a flow path between the first fluid opening 20 and the second fluid opening 40. Hence, this plunger position allows blocking of fluid to flow between the valve bore 80 and the third fluid opening 60. This plunger position is shown in Fig. 6B. Notice that the third fluid opening 60 in connection with this second embodiment is located "below" the second fluid opening 40, in contrast to the geometry described in connection with the first embodiment. This relabeling should not confuse the skilled person when practicing the disclosure. Conversely, moving the plunger 200 towards the second plunger position enables opening of a flow path between the first fluid opening 20 and the third fluid opening 60. This plunger position allows blocking of fluid to flow between the valve bore 80 and the second fluid opening 40. This plunger position is shown in Fig. 6C. This second embodiment of the valve assembly 1000 may facilitate a simple manufacturing including fewer part. The plunger 200 can assume many positions along the axial extension A1, thereby facilitating control of a volumetric flow in one flow path at a time, similarly as described in connection with the first embodiment above.

The flow-limiting valve housing portion 110 may comprise a soft sealing element 111. The soft sealing element 111 may be as set out above, in connection with the first embodiment. By way of example, the soft sealing element may be a flat ring, an O ring, or the like. The plunger 200 may comprise a first 201 and a second 202 soft sealing element. The first soft sealing element 201 may be circumferentially arranged on an exterior of the plunger in proximity to the top end of the plunger. The second soft sealing element 202 may be circumferentially arranged on an exterior of the plunger in proximity to the bottom end of the plunger.

In connection with Fig. 7 there is shown a flow chart of a method 500 for controlling a fluid flowing through a valve assembly 1000 in a heating or cooling system. The method comprises diverting a fluid flow to flow in a first flow path FP1 being a flow path between a first fluid opening 20 of the valve assembly 1000 and a second fluid opening 40 of the valve assembly 1000, or in a second flow path FP2 being a flow path between the first fluid opening 20 and a third fluid opening 60 of the valve assembly 1000. The method further comprises, provided a specific flow path of the first FP1 and the second FP2 flow path is open to allow a volumetric flow, exclusively controlling the volumetric flow of the fluid flowing in the specific flow path, thereby allowing to separately control a volumetric flow of the fluid flowing in the specific flow path while the remaining flow path is closed. Hence, according to the method 500 and, referring to Fig. 4 or 6, a fluid flowing between the first fluid opening 20 and a remaining fluid opening 40;60 of the second 40 or the third 60 fluid opening may not only be diverted, but also controlled. A volumetric flow of a fluid flowing from the first fluid opening 20 to, e.g., the second fluid opening 40, Fig. 4B, may thereby be changed by moving the plunger 200 along the axial extension A1 of the valve bore 80. Further, when the plunger 200 is axially situated in a fluid flow preventing position such that the sleeve opening 212 is axially aligned with the flow limiting valve housing portion 110, fluid is prevented to flow both along the first flow path FP1 and in the second flow path FP2 simultaneously. The control of the volumetric flow may be performed by an electronically controlled linear actuator 300 having a translator 210 operably connected thereto, wherein the translator 310 is further operably connected to the plunger 200. The electronically controlled linear actuator 300 may be electrically connected to a controller comprising circuitry configured to execute a controlling function for controlling, e.g., a temperature in a device installed in a heating or cooling system.

In connection with Figs 8A-B there is shown a first set of example use cases of the valve assembly 1000 in which the valve assembly 1000 is installed in a heating/cooling/tap water system. In Fig. 8A the valve assembly is installed as a diverting valve, allowing one incoming fluid flow and two outgoing fluid flows. In Fig. 8B the valve assembly is installed as a mixing valve, allowing two incoming fluid flows and one outgoing fluid flow. In the first example use case, a radiator RA1 is connected to a first heat exchanger HX1, and a tap water arrangement TW1 is connected to a second heat exchanger HX2. The heating or cooling system considered here further comprises a first fluid pump P1 and a second fluid pump P2. The valve assembly 1000 is connected to both the first heat exchanger HX1 and the second heat exchanger HX2, such that the first fluid outlet 40 of the valve assembly 1000 fluidly connects to the first heat exchanger HX1, and the second fluid outlet 60 fluidly connects to the second heat exchanger HX2. The fluid inlet 20 of the valve assembly 1000 hydronically connects to a first heat source HS1. In Fig. 8A fluid flows in piping of the heating or cooling system from the heat source HS1 into the valve assembly 1000, whereafter the fluid is diverted to flow either to the first heat exchanger HX1 or to the second heat exchanger HX2. Hence, a temperature may be controlled in both the first radiator RA1 and in tap water to be tapped in the tap water arrangement TW1 using a single valve assembly 1000. In connection with Fig. 8B there is shown an arrangement similar to the arrangement in Fig. 8A, but where the fluid flows in an opposite direction with a remained function. The direction of a fluid flow in the heating or cooling system can be adjusted by change position(s) of the pump(s) P1,P2 or by connecting the pump(s) P1,P2 in an opposite direction, etc.

In connection with Figs 9A-B there is shown a second example use case of the valve assembly 1000 in which the valve assembly 1000 is installed in a heating or cooling system. In Fig. 9A the valve assembly 1000 is installed as a mixing valve in that the valve assembly 1000 allows two incoming fluid flows and one outgoing fluid flow. Conversely, in Fig. 9B the valve assembly 1000 is installed to allow one incoming fluid flow and two outgoing fluid flows. Herein heat supply or heat removal in the first heating or cooling device RA1 may be performed by hydronically connect the valve assembly 1000 with the first heating or cooling device RA1 via the first liquid opening 20 of the valve assembly 1000, wherein the first liquid opening 20 functions as a fluid outlet 20 of the valve assembly. The remaining fluid openings 40;60 herein functions as fluid inlets 40;60, wherein a first fluid opening 40 functions as a first fluid inlet 40 fluidly connected to the heat source HS1, and wherein the second fluid opening 60 functions as a second fluid inlet 60 fluidly connected to a heat sink HS2. Preferably, the heat source HS1 may provide a first tempered fluid having a temperature above a surrounding temperature. By way of example, the first tempered fluid may have a temperature in the range of 40-60 degrees Celsius. The heat sink HS2 may provide a second tempered fluid having a temperature below the surrounding temperature. By way of example, the second tempered fluid may have a temperature in the range of 5-15 degrees Celsius. Hence, the valve assembly 1000 may transfer heat from two sources separately. In Fig. 9A the valve assembly 1000 is installed on a supply side, whereas, in Fig. 9B, the valve assembly 1000 is installed on a return side.

Accordingly, and in summary, in some embodiments discussed above, there has been described a valve assembly 1000 which may function as a diverting valve. The valve assembly 1000 may thereby allow a fluid to flow in different flow paths separately, such that while one flow path is open for a fluid flow the remaining flow path is completely closed for a fluid flow. Further, a fluid flow in the open flow path can be changed substantially continuously while the remaining flow path is blocked. In addition, fluid is prevented to flow through the valve assembly while the plunger is situated in the fluid flow preventing position between the first and the second plunger position.

The person skilled in the art realizes that the present invention by no means is limited to the preferred embodiments described above. On the contrary, many modifications and variations are possible within the scope of the appended claims. Variations to the disclosed embodiments can be understood and effected by the skilled person in practicing the claimed invention, from a study of the drawings, the disclosure, and the appended claims.

## Claims

1. A valve assembly (1000) comprising:
a valve housing (100) comprising:
a first fluid opening (20),
a second fluid opening (40),
a third fluid opening (60),
a valve bore (80) having an axial extension (A1),
a flow limiting valve housing portion (110), and
a plunger (200) disposed within the valve bore (80), the plunger (200) being arranged to move along the axial extension (A1) of the valve bore (80) between a first plunger position and a second plunger position, wherein the plunger (200), while being axially situated in a fluid flow preventing position being a position between the first and the second plunger position, prevents a fluid to flow in a first flow path (FP1) and in a second flow path (FP2), wherein the first flow path (FP1) is a flow path between the first fluid opening (20) and the second fluid opening (40), and wherein the second flow path (FP2) is a flow path between the first fluid opening (20) and the third fluid opening (60).

2. The valve assembly (1000) according to claim 1, wherein the plunger (200) has, on axially opposing sides, open ends.

3. The valve assembly (1000) according to claim 1 or 2, wherein the plunger (200) comprises a sleeve (210) being unobstructed.

4. The valve assembly (1000) according to any one of claims 1-3, wherein a first merge (84) between the second fluid opening (40) and the valve bore (80) and a second merge (86) between the third fluid opening (60) and the valve bore (80) are axially displaced along the axial extension of the valve bore (80) such that the first merge (84) and the second merge (86) are located on axially opposing sides of the flow limiting valve housing portion (110).

5. The valve assembly (1000) according to any one of claims 1, 2 or 4, wherein a sleeve (210) of the plunger (200) has a first (218) and a second (228) end being separated along an axial extension of the plunger (200), and wherein the sleeve (210) comprises a sleeve opening (212) being, at least partially, constituted by a circumferential through-going opening being circumferentially oriented in a geometrical plane perpendicular to the axial extension (A1') of the plunger (200) and being located between the first (218) and the second (228) end of the sleeve (210).

6. The valve assembly (1000) according to claim 5, wherein an outer circumferential edge portion (211, 213) of the circumferential through-going (212) opening is chamfered, thereby facilitating controlling a volumetric fluid flow exclusively in the first flow path (FP1) or exclusively in the second flow path (FP2).

7. The valve assembly (1000) according to any one of claims 1-6, wherein the first fluid opening (20) is a fluid inlet, the second fluid opening (40) is a first fluid outlet, and the third fluid opening (60) is a second fluid outlet.

8. The valve assembly (1000) according to any one of claims 1-6, wherein the first fluid opening (20) is a fluid outlet, the second fluid opening (40) is a first fluid inlet, and the third fluid opening (60) is a second fluid inlet.

9. The valve assembly (1000) according to any one of claims 1-8, further comprising
an electronically controlled linear actuator (300), and
a translator (310) being aligned along the axial extension (A1) of the valve bore (80), the translator (310) being operably connected to the electronically controlled linear actuator (300) and the plunger (200), wherein a movement of the translator (310) along the axial extension (A1) thereby generates a movement of the plunger (200) along the axial extension (A1).

10. The valve assembly (1000) according to any one of claims 1-9, wherein the valve housing (100) is manufactured by a durable material, the durable material being any one of steel, brass, composite, iron, or any compound thereof.

11. A method (500) for controlling a fluid flowing through a valve assembly (1000) in a heating or cooling system, the method (500) comprising
diverting (510) a fluid flow to flow in a first flow path (FP1) being a flow path between a first fluid opening (20) of the valve assembly (1000) and a second fluid opening (40) of the valve assembly (1000), or in a second flow path (FP2) being a flow path between the first fluid opening (20) and a third fluid opening (60) of the valve assembly (1000), and
provided a specific flow path of the first (FP1) and the second (FP2) flow path is open to allow a volumetric flow, exclusively controlling the volumetric flow of the fluid flowing in the specific flow path, thereby allowing to separately control a volumetric flow of the fluid flowing in the specific flow path while the remaining flow path is closed.

12. The method (500) according to claim 11, wherein the control of the volumetric flow is performed by an electronically controlled linear actuator (300) having a translator (310) operably connected thereto, wherein the translator (310) is further operably connected to a plunger (200) situated in a valve bore (80) of the valve assembly (1000).

13. Use of the valve assembly (1000) according to any one of claims 1-10 for diverting and/or controlling a fluid flowing in a heating or cooling system.
